# EUROPEAN PATENT APPLICATION

(11) **EP 4 246 315 A1**
(43) Date of publication of application: **20.09.2023**
(21) Application number: 22161932.3
(22) Date of filing: 14.03.2022
(51) Int. Cl.: G06F 8/65

(54) **ELECTRONIC COMPONENT FOR ELECTRONIC EQUIPMENT AND A METHOD FOR PROVISIONING AND UPDATING SUCH AN ELECTRONIC COMPONENT**

(71) Applicant: Secure Thingz Limited, Trumpington, Cambridge CB2 9FF (GB)
(72) Inventor: DUNNE, Peter, Godmanchester, Huntingdon, PE29 2NG (GB); WOODRUFF, Tim, Cambridge, CB2 1RR (GB)
(74) Representative: Patentship Patentanwaltsgesellschaft mbH

(57) **Abstract**

The invention relates to an electronic component (170) being provisioned with security sensitive provisioning data (150) including a security sensitive application, wherein the electronic component (170) comprises a processor (171) configured to execute the security sensitive application. The processor (171) is further configured to detect a transitory memory device (180) connected to the electronic component (170) and to install a backup application (185a) stored in a memory (185) of the transitory memory device (180) in a memory (175) of the electronic component (170) for updating the security sensitive application.

## Description

### TECHNICAL FIELD

The invention relates to electronic components, such as electronic chips, for electronic equipment. More specifically, the invention relates to an electronic component, such as an electronic chip, for electronic equipment and a method for provisioning and updating such an electronic component with security sensitive provisioning data.

### BACKGROUND OF THE INVENTION

The production and assembly of state-of-the-art electronic equipment, such as smartphones, tablet computers as well as other types of electronic consumer or loT equipment, often happens in a distributed fashion in that the various electronic components, including the electronic chips of electronic consumer equipment are manufactured, provisioned or personalized and finally assembled at different locations and by different parties. For instance, an electronic component for an electronic equipment may be originally manufactured by a chip manufacturer and provisioned by another party with security sensitive provisioning data, such as a firmware, before being assembled into the final end product by the manufacturer of the electronic equipment, e.g. an OEM. A similar problem may arise in In-system programming (ISP), also called incircuit serial programming (ICSP), where electronic components may be programmed, i.e. provided with security sensitive provisioning data, while already installed in an electronic equipment, rather than requiring the electronic component, e.g. electronic chip, to be programmed prior to installing it into the electronic equipment.

Electronic equipment, which supports the ability to securely update itself, can become unfunctional if, for instance, a firmware update contains software bugs which prevent the firmware from running or installing a working update. This is a typical problem in managing software updates which can lead to the need to "rollback" to recover the system to an earlier known working version. However, for a security sensitive electronic component, such as a security sensitive electronic chip, with a secure boot manager it may not be possible to perform such a rollback due to security considerations and the absence of an operating system of the security sensitive electronic component to manage firmware updates.

This issue may be addressed by supporting multiple redundant secure update slots within a memory of the electronic component and by providing a mechanism to fallback to use a previous installed firmware if the currently running one fails. However, this approach leads to the following disadvantages. Firstly, supporting multiple redundant secure update slots within the memory of the electronic component leads to an increased memory footprint on the often resource-limited electronic equipment. Secondly, the electronic equipment would require additional support in the software framework to detect a fatal firmware error, which can be difficult in resource-limited electronic equipment, where the firmware or at least part thereof is executed in a secure environment.

### SUMMARY OF THE INVENTION

It is therefore an object of the invention to provide an electronic component, such as an electronic chip, for electronic equipment as well as a method for provisioning and updating such an electronic component.

The foregoing and other objects are achieved by the subject matter of the independent claims. Further implementation forms are apparent from the dependent claims, the description and the figures.

According to a first aspect, an electronic component being provisioned with security sensitive provisioning data including a security sensitive application is provided. In an embodiment, the electronic component for electronic equipment may be an electronic chip or a printed circuit board including an electronic chip. The electronic component comprises a processor configured to execute the security sensitive application. The processor is further configured to detect a transitory memory device connected to the electronic component and to install a backup application stored in a memory of the transitory memory device in a memory of the electronic component for updating the security sensitive application.

In an embodiment, the processor is configured to execute the backup application and to install an application update in the memory of the electronic component.

In an embodiment, the electronic component further comprises a communication interface configured to obtain the application update.

In an embodiment, the processor is configured to execute a boot manager, wherein the boot manager is configured to detect the transitory memory device connected to the electronic component and to install the backup application stored in the memory of the transitory memory device in the memory of the electronic component.

In an embodiment, the electronic component comprises an electronic chip or printed circuit board and wherein the electronic chip or printed circuit board comprises one or more pads and/or one or more pins configured to be connected to the transitory memory device.

In an embodiment, the processor is configured to determine a type of the transitory memory device.

In an embodiment, the processor is further configured to check a version number of the backup application and/or the application update.

In an embodiment, the processor is configured to use a version number of the security sensitive application for the backup application, when installing the backup application.

According to a second aspect, a method for operating an electronic component being provisioned with security sensitive provisioning data including a security sensitive application is provided. The method comprises the steps of:
executing the security sensitive application;
detecting a transitory memory device connected to the electronic component; and
installing a backup application stored in a memory of the transitory memory device in a memory of the electronic component for updating the security sensitive application.

The method according to the second aspect can be performed by the electronic component according to the first aspect. Thus, further features of the method according to the second aspect result directly from the functionality of the electronic component according to the first aspect as well as its different implementation forms and embodiments described above and below.

According to a third aspect a computer program product is provided, comprising a computer-readable storage medium for storing program code which causes a computer or a processor to perform the method according to the second aspect, when the program code is executed by the computer or the processor.

Embodiments of the invention can be implemented in hardware and/or software.

### BRIEF DESCRIPTION OF THE DRAWINGS

Further embodiments of the invention will be described with respect to the following figures, wherein:
Fig. 1 shows a schematic diagram illustrating a provisioning system including a provisioning control apparatus and a provisioning apparatus for provisioning an electronic component according to an embodiment of the invention with a security sensitive application; and
Figs. 2a and 2b show schematic diagrams illustrating the provisioned electronic component of figure 1 in communication with a transitory memory device for updating the security sensitive application of the electronic component by means of a backup application provided by the transitory memory device.

In the figures, identical reference signs will be used for identical or at least functionally equivalent features.

### DETAILED DESCRIPTION OF EMBODIMENTS

In the following detailed description, reference is made to the accompanying drawings, which form part of the disclosure, and in which are shown, by way of illustration, specific aspects in which the present invention may be implemented. It is understood that other aspects may be utilized and structural or logical changes may be made without departing from the scope of the present invention. The following detailed description, therefore, is not to be taken in a limiting sense, as the scope of the present invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

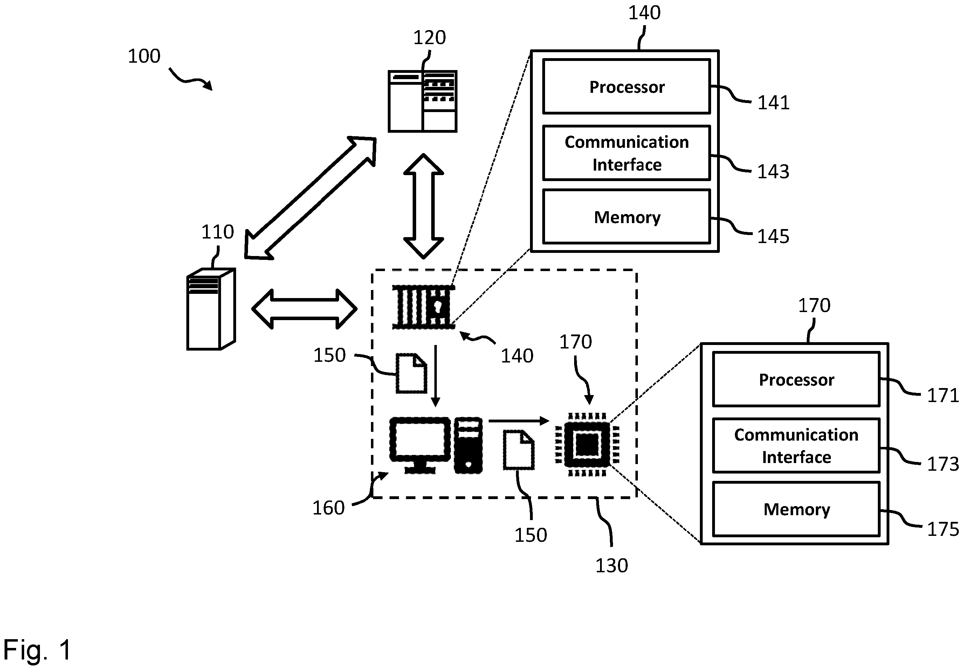

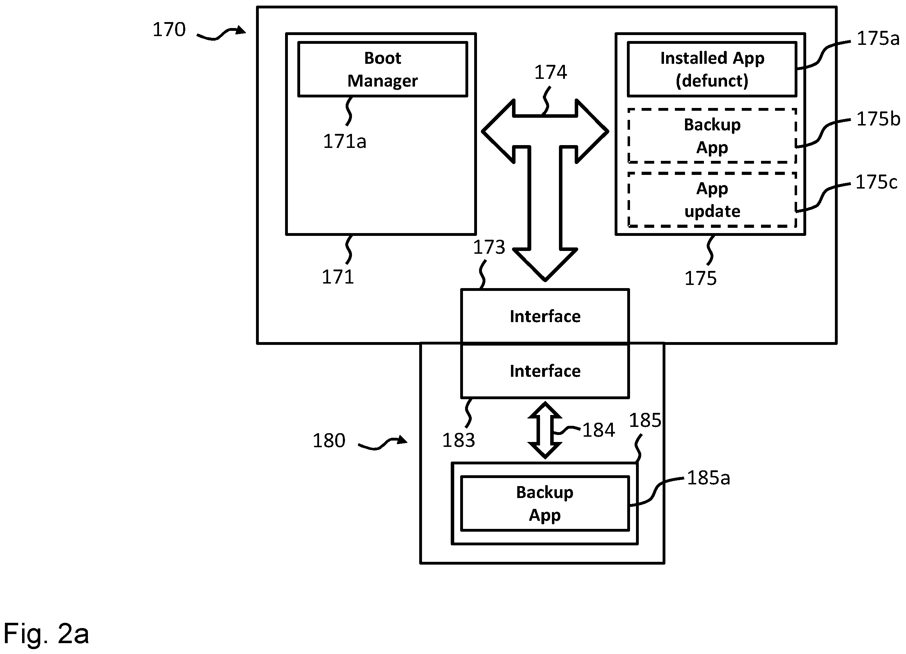

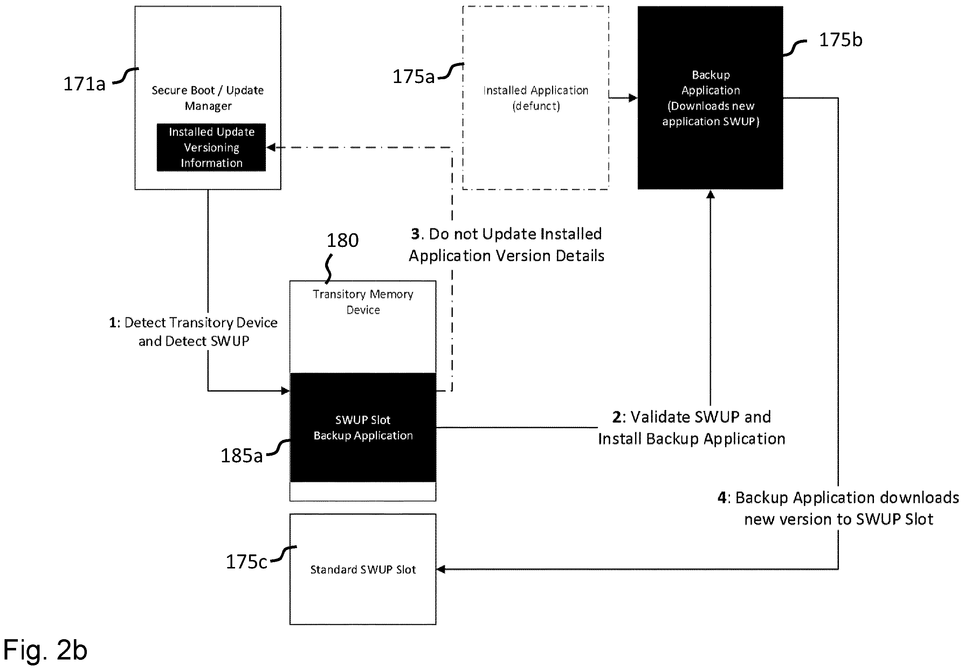

Figure 1 shows a schematic diagram of a provisioning system 100 for provisioning a plurality of electronic components, in particular electronic chips 170 according to an embodiment of the invention for electronic equipment. As will be described in more detail further below, the provisioning system 100 may comprise a provisioning control apparatus 140, a remote server 110, a security server 120 and a provisioning apparatus 160 (also referred to as "programmer" 160) for provisioning or personalizing electronic components, such as chips or microprocessors 170 with security sensitive provisioning data 150, including a security sensitive application, in particular a firmware 175a (shown in figures 2a and 2b) to be executed by the respective electronic component 170. In an embodiment, the security sensitive provisioning data 150 may further include electronic keys, certificates and/or configuration data, such as register settings.

As illustrated in figure 1, the provisioning control apparatus 140, the remote server 110 and the security server 120 may be configured to communicate with each other via a communication network, such as the Internet. Thus, the provisioning control apparatus 140, the remote server 110 and the security server 120 may be at different locations and under the control of different parties. As illustrated in figure 1, the provisioning control apparatus 140 and the provisioning apparatus 160 may be located within a production environment 130, such as a personalization factory 130. In an embodiment, the remote server 110 may be under the control or associated with an electronic equipment manufacturer, e.g. an OEM, wherein the electronic equipment manufacturer assembles electronic equipment, such as smartphones, tablet computers or other types of loT or electronic consumer equipment, using the electronic components, e.g. chips or microprocessors 170 provisioned by the provisioning apparatus 160 with the security sensitive provisioning data 150.

In an embodiment, the provisioning control apparatus 140, the remote server 110 and the security server 120 are configured to securely communicate with each other using one or more cryptographic schemes, such as a public key infrastructure and/or a hybrid cryptographic scheme. In an embodiment, the provisioning control apparatus 140 may be under the remote control of the security server 120.

The provisioning control apparatus 140 is configured to be coupled to the provisioning apparatus 160, for instance, by a wired or a wireless connection. In an embodiment, the provisioning apparatus 160 may be implemented as a personal computer and the provisioning control apparatus 140 may be implemented as a PC card inserted in the provisioning apparatus 160. In an embodiment, the provisioning control apparatus 140 may be implemented as a hardware security module (HSM). The provisioning apparatus 160 may comprise an electrical and/or mechanical interface for interacting directly or indirectly via a provisioning equipment with the electronic components 170. For instance, the provisioning apparatus 160 may comprise a personalization tray for personalizing a batch of electronic components, e.g. chips 170 inserted therein.

In the embodiment illustrated in figure 1 the provisioning control apparatus 140 may comprise a processor 141, a communication interface 143 and a non-volatile memory 145. The communication interface 143 of the provisioning control apparatus 140 is configured to securely provide the provisioning data 150, including the security sensitive application, in particular firmware 175a to the provisioning apparatus 160 for storing the provisioning data 150 in a respective electronic component, e.g. chip 170.

In an embodiment, the communication interface 143 of the provisioning control apparatus 140 is configured to receive the provisioning data 150 from the remote OEM server 110 or the remote security server 120. In an embodiment, the communication interface 143 of the provisioning control apparatus 140 is further configured to receive at least a part of the provisioning data 150 in encrypted form. In an embodiment, the processor 141 of the provisioning control apparatus 140 is configured to generate at least a portion of the provisioning data 150.

Figures 2a and 2b show schematic diagrams illustrating an exemplary provisioned electronic component, in particular chip 170 according to an embodiment in communication with a transitory memory device 180 for updating the security sensitive application, e.g. firmware 175a of the electronic chip 170 by means of a backup application 185a provided by the transitory memory device 180.

As will be described in more detail in the following in the context of figures 2a and 2b, the electronic component, in particular electronic chip 170 according to an embodiment supports the ability to intrusively introduce a transitory backup application 185a via a nonpermanently fitted transitory memory device 180, such as an SD card or a plug-in external flash device, that can be booted instead of the potentially non-functional security sensitive application, e.g. firmware 175a of the electronic chip 170. The originally installed security sensitive application, e.g. firmware 175a of the electronic chip 170 may have become unfunctional because of an over-the-air update of the originally installed security sensitive application, e.g. firmware 175a.

To this end, as illustrated in figure 2a, a boot manager 171a implemented by the processing circuitry 171 of the electronic component 170 is configured to detect whether the transitory memory device 180, e.g. SD card 180 has been fitted to the electronic component 170. In an embodiment, where the transitory memory device 180 is a SD card, the interface 173 of the electronic component 170 is configured to engage with a corresponding interface 183 of the SD card 180 comprising a plurality of SD card pins. Information about the engagement of the interface 173 of the electronic component 170 with the pins 183 of the SD card 180 may be provided to the boot manager 171a via a communication bus 174 of the electronic component 170.

In an embodiment, the boot manager 171a implemented by the processing circuitry 171 of the electronic component 170 is further configured to detect whether a secure backup application 185a is stored in a memory 185 of the transitory memory device 180.

In an embodiment, the boot manager 171a implemented by the processing circuitry 171 of the electronic component 170 is further configured to ensure that the secure backup application 185a stored in the memory 185 of the transitory memory device 180 is installed in preference to any potentially more recent applications which is already running and/or installed on the electronic component 170.

In an embodiment, the boot manager 171a implemented by the processing circuitry 171 of the electronic component 170 is further configured to enable the secure backup application 185a stored in the memory 185 of the transitory memory device 180 to install newer versions of the application software (referred to as an application update 175c) on the electronic component 170, which do not contain the defect that necessitated the need to use the backup application 185a in the first place. In an embodiment, the application update 175c may be obtained over-the-air by the electronic component 170 under the control of the backup application 185a and stored in the memory 175 of the electronic component 170.

As already described above, in an embodiment, the backup application 185a, which may be stored in a backup application slot 175b of the memory 175 of the electronic component 170, is configured to install on the electronic component 170 the application update 175c, e.g. an image of a working version of the non-functional security sensitive application, e.g. firmware 175a of the electronic chip 170. In an embodiment, the backup application 185a is secured in the same way as any other security sensitive application installed on the electronic component 170. In an embodiment, the backup application 185a may be further configured to perform one or more functionality tests of at least portions of the electronic component 170 and/or serve other debugging purposes.

In an embodiment, the secure boot manager 171a is adapted to be configured, for instance, by the OEM with respect to what types of transitory memory devices 180, such as SD card, Flash memories and the like, may be connected to the electronic component 170 for installing the secure backup application 185 on the electronic component 170. In an embodiment, the secure boot manager 171a is configured to mark the transitory memory device 180 as "temporary" so that the transitory memory device 180 is not physically available for the electronic component 170 to use (other than providing the secure backup application 185a). In a further embodiment, a software update slot (referred to as SWUP slot in figure 2b) is provided on the transitory memory device 180 so that - if the transitory memory device 180 is connected to the electronic component 170 - the secure boot manager 171a knows how to retrieve the backup application 185a from the transitory memory device 180.

As already described above, in an embodiment, the secure boot manager 171a is configured to detect whether the transitory memory device 180 contains an appropriate backup application 185a. In an embodiment, the secure boot manager 171a implemented by the processing circuitry 171 of the electronic component 170 is further configured to install (in cooperation with the backup application 185a) the secure application update 175c in preference to executing the currently installed potentially malfunctioning application 175a, even if the image of the secure application update 175c may have been created before the currently installed application 175a. In an embodiment, the secure boot manager 171a is further configured to ensure the any secure application update 175c is still a valid secure application to prevent an attack on the electronic component. In an embodiment, the secure boot manager 171a is further configured to ensure that a version rollback system is still maintained so that the electronic component 170 will not automatically install old versions of the application, i.e. the secure boot manager 171a may be configured to verify that the secure application update 175c is not an old version of the software.

An embodiment of the process of detecting and installing the transitory backup application 185a on the electronic component 170 is shown in figure 2b. In the embodiment shown in figure 2b, the backup application 185a contains a version identifier which is accepted by the secure boot manager 171a. In this case, the backup application 185a can be provided with a special configuration that instructs the secure boot manager 171a to keep the existing version number when installing the backup application 185a. In this way, the backup application 185a can be considered to mimic the currently installed version number and hence the version rollback strategy is not compromised, but the backup application 185a is still able to be installed irrespective of the currently installed application's version and the rollback strategy that has been selected. In other words, in an embodiment, the secure boot manager 171a may be configured to not overwrite the information about the currently installed version 175a, giving the impression to the electronic component 170 that the installed version number has not changed. The result of this is that the backup application 185a can always be installed but then the system will only install newer versions than the one which caused the failure that necessitated the backup application to be used.

In an embodiment, generating a backup application 185a shall require the same security process to be carried out as is done for any normal application (e.g 175a, 175c) in order for it to be successfully decrypted and authenticated by the secure boot manager 171a. However, note that when choosing an application version number for the backup application the security system will generate a special number which will enable the backup application to be accepted despite any version rollback scheme which may be in used".

In other words, in an embodiment, the secure boot manager 171a may be further configured to perform a software update mastering for generating a secure SW update from an application image. Producing a backup application shall require the same security process to be carried out as any normal application, however the needs to be the ability for it to be marked as a backup so that system will accept install of the backup despite any version rollback scheme.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application.

Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. An electronic component (170) being provisioned with security sensitive provisioning data (150) including a security sensitive application (175a), wherein the electronic component (170) comprises:
a processor (171) configured to execute the security sensitive application (175a);
wherein the processor (171) is further configured to detect a transitory memory device (180) connected to the electronic component (170) and to install a backup application (185a) stored in a memory (185) of the transitory memory device (180) in a memory (175) of the electronic component (170) for updating the security sensitive application (175a).

2. The electronic component (170) of claim 1, wherein the processor (171) is configured to execute the backup application (185a) and to install an application update (175c) in the memory (175) of the electronic component (170).

3. The electronic component (170) of claim 2, wherein the electronic component (170) further comprises a communication interface (173) configured to obtain the application update (175c).

4. The electronic component (170) of claim 2 or 3, wherein the processor (171) is further configured to check a version number of the backup application (185a) and/or the application update (175c).

5. The electronic component (170) of claim 4, wherein the processor (171) is configured to use a version number of the security sensitive application (175a) for the backup application (185a), when installing the backup application (185a).

6. The electronic component (170) of any one of the preceding claims, wherein the processor (171) is configured to execute a boot manager (171a), wherein the boot manager (171a) is configured to detect the transitory memory device (180) connected to the electronic component (170) and to install the backup application (185a) stored in the memory (185) of the transitory memory device (180) in the memory (175) of the electronic component (170).

7. The electronic component (170) of any one of the preceding claims, wherein the electronic component (170) comprises an electronic chip or printed circuit board and wherein the electronic chip or printed circuit board comprises one or more pads and/or one or more pins configured to be connected to the transitory memory device (180).

8. The electronic component (170) of any one of the preceding claims, wherein the processor (171) is configured to determine a type of the transitory memory device (180).

9. A method for operating an electronic component (170) being provisioned with security sensitive provisioning data (150) including a security sensitive application (175a), wherein the method comprises:
executing the security sensitive application (175a);
detecting a transitory memory device (180) connected to the electronic component (170); and
installing a backup application (185a) stored in a memory (185) of the transitory memory device (180) in a memory (175) of the electronic component (170) for updating the security sensitive application (175a).

10. A computer program product comprising a computer-readable storage medium for storing program code which causes a computer or a processor to perform the method of claim 9 when the program code is executed by the computer or the processor.
